# EUROPÄISCHE PATENTANMELDUNG

(11) **EP 2 916 050 A1**
(43) Veröffentlichungstag der Anmeldung: **09.09.2015**
(21) Anmeldenummer: 14157640.5
(22) Anmeldetag: 04.03.2014
(51) Int. Cl.: F16K 1/226, F16J 15/00

(54) **Absperrorgan für eine Rohrleitung**

(71) Anmelder: Rico-Sicherheitstechnik AG, 9100 Herisau (CH)
(72) Erfinder: Zellweger, Daniel, 9056 Gais (CH); Aloi, Giuseppe Walter, 9443 Widnau (CH); Letzner, Martin, 8457 Humlikon (CH); Oberlin, Pascal, 9450 Lüchingen (CH); Allgäuer, Mario, 8370 Sirnach (CH)
(74) Vertreter: Hepp Wenger Ryffel AG

(57) **Zusammenfassung**

Die Erfindung betrifft ein Absperrorgan (1) für eine Rohrleitung (2), insbesondere Absperrklappe, umfassend ein Gehäuse (3) mit einer Gehäuseinnenwand (4), eine parallel zur Strömungsrichtung verlaufende Längsachse (5) sowie eine im Gehäuse (3) senkrecht zur Längsachse (5) drehbar gelagerte Verschlussscheibe (6), die zwischen einer Schliessstellung, in welcher die Verschlussscheibe (6) im Wesentlichen quer zur Längsachse (5) angeordnet ist, und einer Offenstellung, in welcher die Verschlussscheibe (6) im Wesentlichen parallel zur Längsachse (5) angeordnet ist, schwenkbar ist, wobei die Verschlussscheibe (6) mit einer elastischen Dichtung (7) zum Abdichten eines in der Schliessstellung vorhandenen Spaltes (8) zwischen der Verschlussscheibe (6) und der Gehäuseinnenwand (4) versehen ist, bei welchem die Dichtung (7) in eine erste Querschnittsform, bei welcher die Dichtung (7) in der Schliessstellung an der Gehäuseinnenwand (4) anliegt, und in eine zweite Querschnittsform, bei welcher die Dichtung (7) in der Schliessstellung die Gehäuseinnenwand (4) nicht berührt, bringbar ist.

## Beschreibung

Die Erfindung betrifft ein Absperrorgan gemäss Anspruch 1 und ein Verfahren zum Öffnen und Schliessen eines erfindungsgemässen Absperrorgans.

Absperrorgane der eingangs genannten Art finden bevorzugt Anwendung beim fluiddichten, insbesondere gasdichten, Verschliessen von Räumen und Leitungen, z.B. in Biosicherheitslabors als Tür oder Schleuse.

Absperrorgane dieser Art weisen den Nachteil auf, dass beim Schwenken der Verschlussscheibe von der Schliessstellung in die Offenstellung und vice versa die Dichtung an der Gehäuseinnenwand reibt und demzufolge einem Verschleiss unterliegt.

Um dem entgegenzuwirken werden harte Dichtungen eingesetzt. Zum Schwenken der Verschlussscheibe ist jedoch ein hohes Drehmoment erforderlich, wenn die Dichtung mit der Gehäuseinnenwand in Berührung ist. Wenn das Absperrorgan mit einem Antrieb versehen ist muss dieser entsprechend dimensioniert werden, was sich negativ auf die Kosten eines solchen Absperrorgans auswirkt.

Es ist daher Aufgabe der Erfindung, ein Absperrorgan der eingangs genannten Art anzugeben, welches die Probleme des Bekannten löst und insbesondere eine höhere Lebensdauer der Dichtung aufweist.

Die Aufgabe wird von einem Absperrorgan mit den Merkmalen des Anspruchs 1 gelöst.

Ein erfindungsgemässes Absperrorgan für eine Rohrleitung, insbesondere eine Absperrklappe, umfasst ein Gehäuse mit einer Gehäuseinnenwand, eine parallel zur Strömungsrichtung verlaufende Längsachse sowie eine im Gehäuse senkrecht zur Längsachse drehbar gelagerte Verschlussscheibe, die zwischen einer Schliessstellung, in welcher die Verschlussscheibe im Wesentlichen quer zur Längsachse angeordnet ist, und einer Offenstellung, in welcher die Verschlussscheibe im Wesentlichen parallel zur Längsachse angeordnet ist, schwenkbar ist, wobei die Verschlussscheibe mit einer elastischen Dichtung zum Abdichten eines in der Schliessstellung vorhandenen Spaltes zwischen der Verschlussscheibe und der Gehäuseinnenwand versehen ist.

Die Dichtung ist in eine erste Querschnittsform, bei welcher die Dichtung in der Schliessstellung an der Gehäuseinnenwand anliegt, und in eine zweite Querschnittsform, bei welcher die Dichtung in der Schliessstellung die Gehäuseinnenwand nicht berührt, bringbar. Die Dichtung wird pneumatisch, hydraulisch oder mechanisch, z.B. eine Zugvorrichtung, von der ersten Querschnittsform in die zweite Querschnittsform gebracht und vice versa.

Die Verschlussscheibe wird erst geschwenkt, wenn die Dichtung sich in der zweiten Querschnittsform befindet und somit die Gehäuseinnenwand nicht berührt, so dass dabei kein Verschleiss durch Reiben der Dichtung an der Gehäuseinnenwand entsteht. Ferner ist die Verschlussscheibe leicht schwenkbar, da eine Andruckkraft der Dichtung gegen die Gehäuseinnenwand fehlt. Antriebe zum Schwenken der Verschlussscheibe können dabei minimal und kostengünstig ausgelegt werden.

In einer bevorzugten Ausführungsform der Erfindung begrenzt die Dichtung einen fluiddruckbeaufschlagbaren Raum. Der Raum wird zumindest teilweise von der Dichtung gebildet, wie z.B. bei schlauchlosen Fahrzeugreifen der Fall ist, und bevorzugt mit einem Gas gefüllt, kann jedoch je nach Anwendung auch mit einer Flüssigkeit gefüllt werden. Der Raum ermöglicht, durch Änderung des Druckunterschiedes zwischen dem Druck in dem Raum und dem Druck in der Rohrleitung, dass die Dichtung von der ersten Querschnittsform in die zweite Querschnittsform bringbar ist.

Weiter bevorzugt ist die Dichtung durch Druckminderung im Raum in die zweite Querschnittsform bringbar. Damit ist insbesondere gemeint, dass die Dichtung sich in der ersten Querschnittsform befindet, wenn der Druckunterschied zwischen dem Druck in dem Raum und dem Druck in der Rohrleitung sehr klein ist, insbesondere zwischen 0 und 200 kPa beträgt.

Bei Druckminderung des im Raum herrschenden Druckes bewirkt die Erhöhung des Druckunterschiedes zwischen dem Druck in dem Raum und dem Druck in der Rohrleitung, dass die Dichtung sich verformt und die zweite Querschnittsform einnimmt.

In einer bevorzugten Ausführungsform nimmt die Dichtung bei Druckausgleich zwischen Raum und einer Umgebung ausserhalb der Rohrleitung die erste Querschnittsform ein. Die Dichtung ist dabei mittels einer Leitung mit einer Umgebung ausserhalb der Rohrleitung verbunden. Der Druck im Raum wird mit dem Druck der Umgebung ausgeglichen. Aufgrund der Materialeigenschaften der Dichtung, welche derart gewählt werden, dass diese in Normalzustand - d.h. bei Umgebungsdruck - die erste Querschnittsform aufweist, nimmt die Dichtung bei Druckausgleich die erste Querschnittsform ein. Die Leitung kann dann geschlossen werden, um einer Verformung der Dichtung durch Druckänderung in der Rohrleitung entgegenzuwirken.

In einer weiteren bevorzugten Ausführungsform ist die Dichtung durch Druckerhöhung im Raum in die erste Querschnittsform bringbar. Damit ist insbesondere gemeint, dass die Dichtung sich in der zweiten Querschnittsform befindet, wenn der Druckunterschied zwischen dem Druck in dem Raum und dem Druck in der Rohrleitung sehr klein ist, insbesondere zwischen 0 und 200 kPa beträgt.

Bei Druckerhöhung des im Raum herrschenden Druckes bewirkt die Erhöhung des Druckunterschiedes zwischen dem Druck in dem Raum und dem Druck in der Rohrleitung, dass die Dichtung sich verformt und die erste Querschnittsform einnimmt. Diese Ausführungsform ist besonders vorteilhaft, wenn in der Rohrleitung hohe Drucke herrschen, welche bei fehlender Druckbeaufschlagung des Raums der Dichtung die Dichtung derart verformen können, dass diese die erste Querschnittsform zumindest teilweise nicht einnehmen und den radialen Spalt zwischen Verschlussscheibe und Gehäuseinnenwand nicht optimal abschliessen kann.

Auch eine Kombination der o.g. Ausführungsformen ist denkbar. So kann vorgesehen werden, dass die Dichtung durch Druckminderung im Raum in die zweite Querschnittsform bringbar ist. Bei Druckausgleich nimmt die Dichtung die erste Querschnittsform ein. Der Raum wird jedoch mit Druck beaufschlagt, so dass sichergestellt werden kann, dass auch bei steigendem Druck in der Rohrleitung eine Abdichtung sichergestellt werden kann. Der im Raum herrschende Druck kann bevorzugt überwacht werden. Ein Druckabfall im Raum könnte daher bedeuten, dass die Abdichtung des Absperrorgans nicht mehr sichergestellt werden kann. Entsprechend kann eine Warnmeldung ergehen und/oder der Druck im Raum wird erhöht.

In einer weiteren bevorzugten Ausführungsform kann der Druckunterschied zwischen dem im Raum und dem in der Rohrleitung herrschenden Druck überwacht werden, wobei bei Über- oder Unterschreitung eines festgelegten Schwellenwertes eine Warnmeldung ergeht und/oder der Druck im Raum angepasst wird.

Eine weitere Ausführungsform sieht vor, dass die Dichtung einen druckbeaufschlagbaren Hohlraum aufweist. Dabei ist die Dichtung bei bevorzugt in einer umlaufenden Nut der Verschlussscheibe angeordnet. Somit entfällt die Notwendigkeit einer dichten Verbindung zwischen Dichtung und Verschlussscheibe, um den Raum druckbeaufschlagbar auszubilden. Eine solche bevorzugte Anordnung vereinfacht die Montage und Wartung eines erfindungsgemässen Absperrorgans.

Die Dichtung ist in einer weiteren Ausführungsform als im Wesentlichen kreisförmiger, hohler O-Ring ausgebildet. Es kann somit auf Standarteile zurückgegriffen werden. Lediglich wenigstens eine Öffnung muss ausgebildet sein oder erzeugt werden, damit der Hohlraum des O-Ringes druckbeaufschlagbar ist.

Bei einer weiteren Ausführungsform weist die Dichtung eine innenseitige Kreisringscheibe zur Verankerung an der Verschlussscheibe auf. Die Kreisringscheibe wird in eine entsprechend ausgebildete Nut der Verschlussscheibe eingefügt und bewirkt eine genaue Positionierung der Dichtung und eine sichere Verbindung der Dichtung mit der Verschlussscheibe.

Die Erfindung betrifft ferner ein Verfahren zum Öffnen und/oder Schliessen eines erfindungsgemässen Absperrorgans. Erfindungsgemäss wird zum Öffnen des Absperrorgans die Dichtung von der ersten Querschnittsform in die zweite Querschnittsform gebracht. Anschliessend kann die Verschlussscheibe von der Schliessstellung in die Offenstellung geschwenkt werden, wobei die Dichtung, wenn die Verschlussscheibe sich in der Offenstellung befindet, die erste Querschnittsform oder die zweite Querschnittsform aufweisen kann.

Zum Schliessen des Absperrorgans wird umgekehrt verfahren. Die Verschlussscheibe wird von der Offenstellung in die Schliessstellung geschwenkt. Dabei muss sichergestellt werden, dass die Dichtung vor dem Schwenken der Verschlussscheibe oder zumindest kurz bevor die Verschlussscheibe die Schliessstellung erreicht hat sich in der zweiten Querschnittsform befindet, damit diese nicht entlang der Gehäuseinnenwand schleift. Wenn die Verschlussscheibe die Schliessstellung erreicht hat wird die Dichtung von der zweiten Querschnittsform in die erste Querschnittsform gebracht und der Spalt wieder geschlossen.

Die Erfindung wird nachfolgend anhand von bevorzugten Ausführungsbeispielen besser beschrieben. Es zeigen:
- Fig.1: eine Schnittansicht einer Ausführungsform eines erfindungsgemässen Absperrorgans,
- Fig. 2: eine perspektivische Ansicht des Absperrorgans der Figur 1 in der Schliessstellung,
- Fig. 3: eine perspektivische Ansicht des Absperrorgans der Figur 1 in der Offenstellung,
- Fig. 4: eine Detailansicht der Dichtung in der ersten Querschnittsform,
- Fig. 5: eine Detailansicht der Dichtung in der zweiten Querschnittsform,
- Fig. 6: eine Schnittansicht durch eine Dichtung gemäss einer weiteren bevorzugten Ausführungsform der Erfindung.

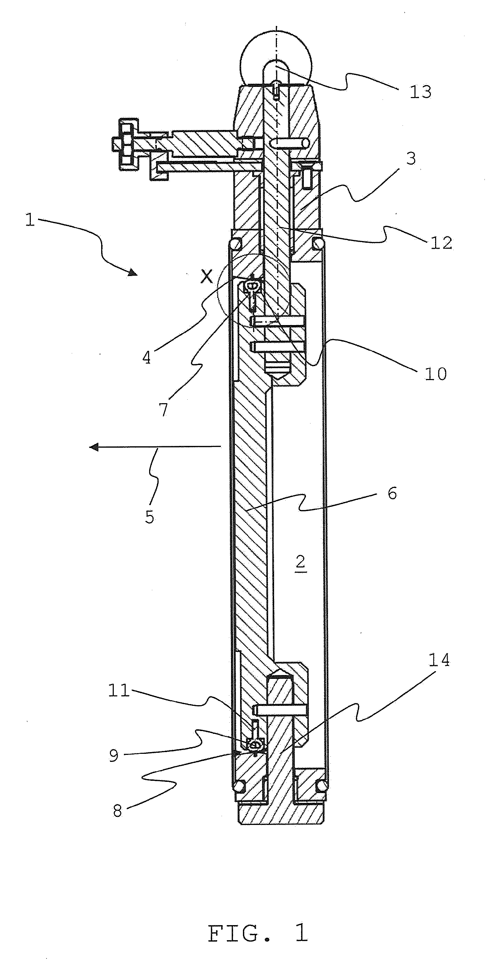

In den Figuren 1 bis 3 ist ein Absperrorgan 1 sichtbar, welches in der Figur 1 in einer schematisch mit dem Bezugszeichen 2 bezeichneten und der Übersichtlichkeit halber nicht dargestellten Rohrleitung angeordnet ist. Eine schematisch mit dem Pfeil 5 dargestellte Längsachse verläuft im Wesentlichen parallel zu einer Strömungsrichtung eines der Rohrleitung 2 durchströmenden Fluids.

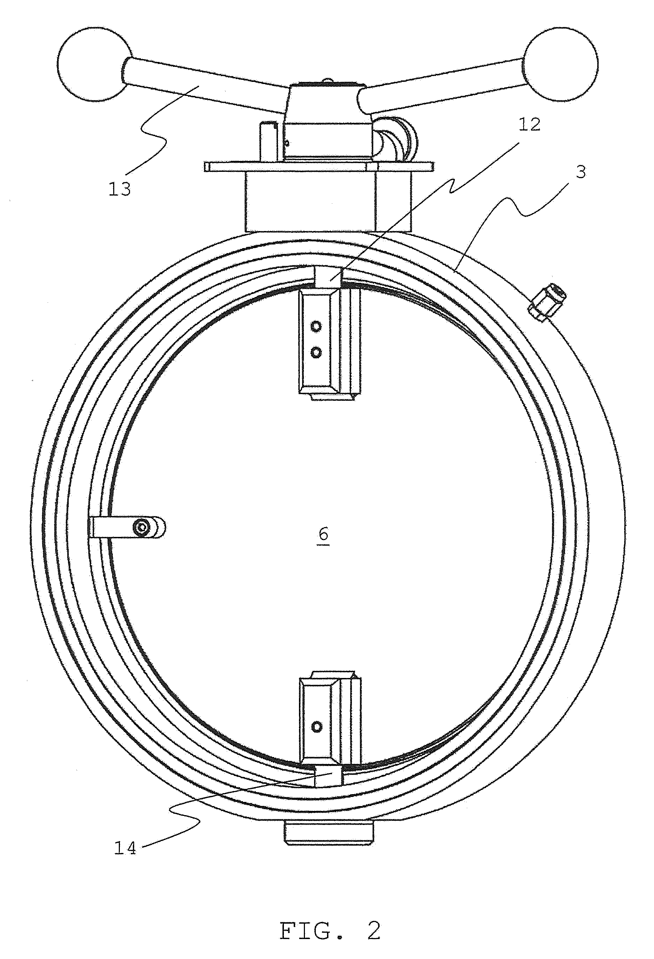

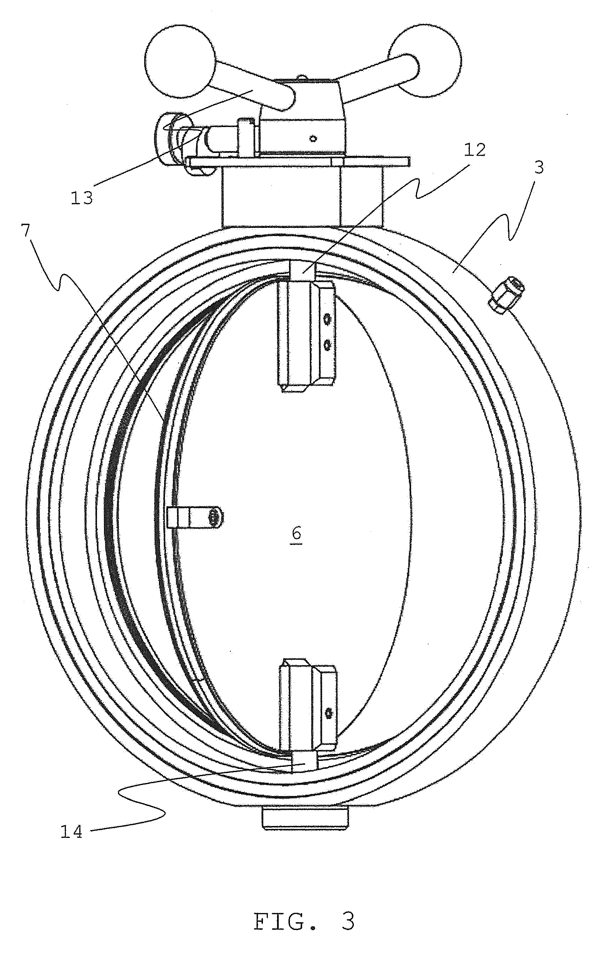

Das Absperrorgan 1 und umfasst ein ringförmiges Gehäuse 3, in welchem eine im Wesentlichen runde Verschlussscheibe 6 drehbar gelagert ist. Die Schnittebene der Figur 1 verläuft durch eine Welle 12, welche mit der Verschlussscheibe 6 fest verbunden ist und mittels eines Hebelgriffes 13 das Schwenken der Verschlussscheibe 6 zwischen einer in der Figur 2 dargestellten Schliessstellung und einer in der Figur 3 dargestellten Offenstellung erlaubt. Die Verschlussscheibe 6 ist ferner im unteren Bereich mit einer Achse oder einem Achsstummel 14 verbunden. Eine sich über den gesamten Durchmesser der Verschlussscheibe 6 erstreckende Welle ist auch denkbar.

In der in der Figur 2 dargestellten Schliessstellung befindet sich die Verschlussscheibe 6 im Wesentlichen senkrecht zur Längsachse 5 und begrenzt einen Leitungsquerschnitt.

In der in der Figur 3 dargestellten Offenstellung ist hingegen die Verschlussscheibe 6 im Wesentlichen parallel zur Längsachse 5 positioniert und gibt den Leitungsquerschnitt im Wesentlichen frei.

Der äussere Umfang der Verschlussscheibe 6 entspricht im Wesentlichen dem Leitungsquerschnitt der Rohrleitung 2, wobei zwischen dem äusseren Umfang der Verschlussscheibe 6 und einer Gehäuseinnenwand 4 ein radialer Spalt 8 vorhanden ist, welcher von einer elastischen Dichtung 7 abgeschlossen wird.

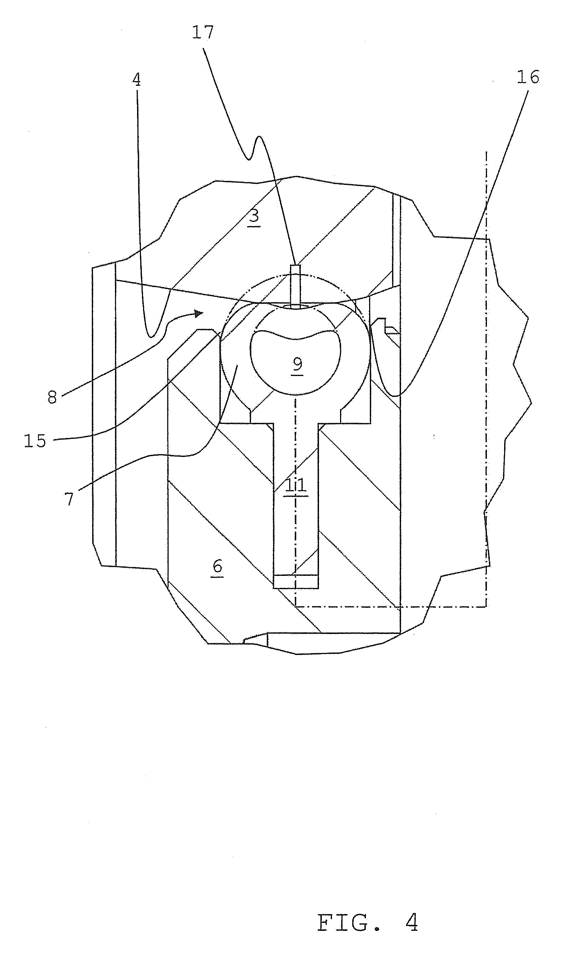

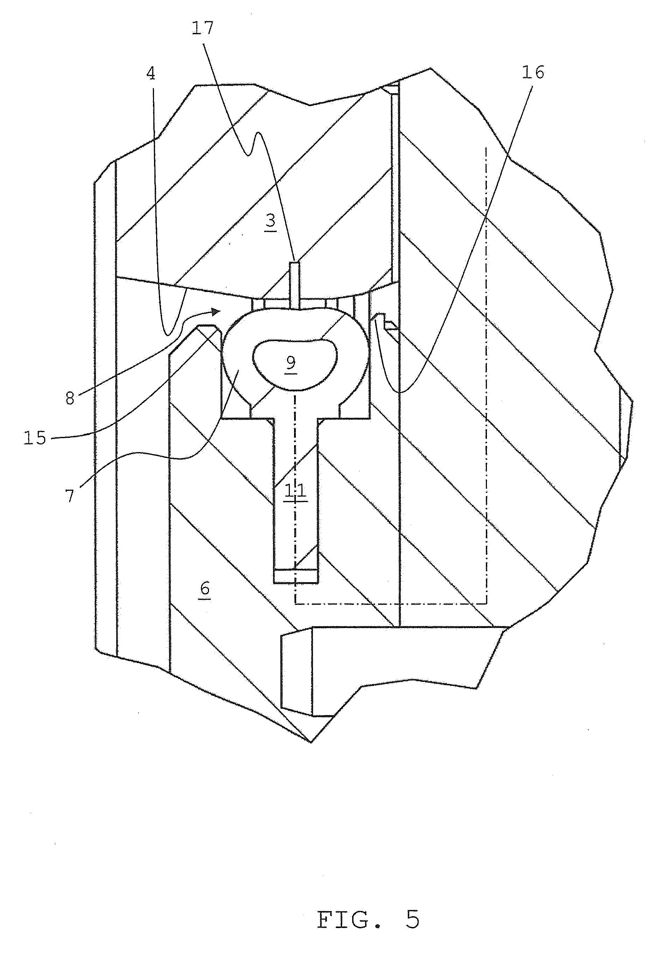

Die Dichtung 7 und der Spalt 8 sind in den Figuren 4 und 5, welche eine Detailansicht des Bereiches X der Figur 1 darstellen, besser sichtbar. Die Dichtung 7 ist als hohle Ringdichtung aus einem elastischen Kunststoff ausgebildet und weist einen Hohlraum 9 auf. Die Dichtung 7 umfasst ferner eine innenseitige - d.h. radial betrachtet dem Mittelpunkt zugewandte - Kreisringscheibe 11 und ist in einer umlaufenden Nut 10 der Verschlussscheibe 6 angeordnet, wobei die innenseitige Kreisringscheibe 11 Aufnahme in einen entsprechend geformten Abschnitt der Nut 10 findet.

Der im Hohlraum 9 der Dichtung 7 herrschende Druck kann über eine in den Figuren 1 bis 5 symbolisch durch eine Strich-Punktlinie dargestellte Leitung geändert werden, welche vorzugsweise über eine Drehdurchführung geführt.

In der Figur 4 ist mit der Strich-Doppelpunktlinie die Querschnittsform der Dichtung 7 angedeutet (im Wesentlichen runder Querschnitt), welche die Dichtung 7 ursprünglich (im entspannten Zustand) aufweist.

Die in den Figuren 4 und 5 mit den Bezugszeichen 15 und 16 versehenen Fasen, welche auch als abgerundete Kante ausgebildet sein können, dienen dem Schutz der Dichtung 7 bei der Montage und in Betrieb.

Die in der Gehäuseinnenwand 4 angeordnete Rille 17 dient der Überprüfung der Dichteigenschaften der Dichtung 7. Dabei wird über nicht dargestellte Mittel die Rille 17 mit Druck, sei es pneumatisch oder hydraulisch, beaufschlagt, bis die Dichtung 7 nicht mehr an der Gehäuseinnenwand 4 liegt. Die Rille 17 kann jedoch entsprechend verwendet werden, um die Dichtung 7 von der ersten Querschnittsform in die zweite Querschnittsform zu bringen.

Wenn die Verschlussscheibe 6 sich in der Schliessstellung befindet und der im Hohlraum 9 herrschende Druck im Wesentlichen dem in der Rohrleitung herrschenden Druck entspricht kann die Dichtung 7 die Ursprungsform nicht einnehmen und, wie in Figur 4 dargestellt, passt sich aufgrund ihrer Elastizität an die Form der Gehäuseinnenwand 4 an. Diese Querschnittsform entspricht der ersten Querschnittsform

Beim Öffnen des Absperrorgans 1 wird der im Hohlraum 9 herrschende Druck verringert und dabei die Dichtung 7 radial nach innen zusammengezogen, bis diese die Gehäuseinnenwand 4 nicht mehr berührt, wie in der Figur 5 sichtbar. Dies entspricht der zweiten Querschnittsform der Dichtung 7.

Nachdem die Dichtung 7 die zweite Querschnittsform eingenommen hat kann durch Betätigung eines Hebelgriffes 13 die Verschlussscheibe 6 von der in der Figur 2 gezeigten Schliessstellung in die in der Figur 3 gezeigte Offenstellung geschwenkt werden.

Zum Schliessen des Absperrorgans 1 wird umgekehrt verfahren. Durch Drehen des Hebelgriffes 13 wird die Verschlussscheibe 6 wieder von der Offenstellung in die Schliessstellung gebracht. Anschliessend wird der im Hohlraum 9 herrschende Druck wieder erhöht, wonach die Dichtung 7 die erste Querschnittsform wieder einnimmt und den Spalt 8 abschliesst.

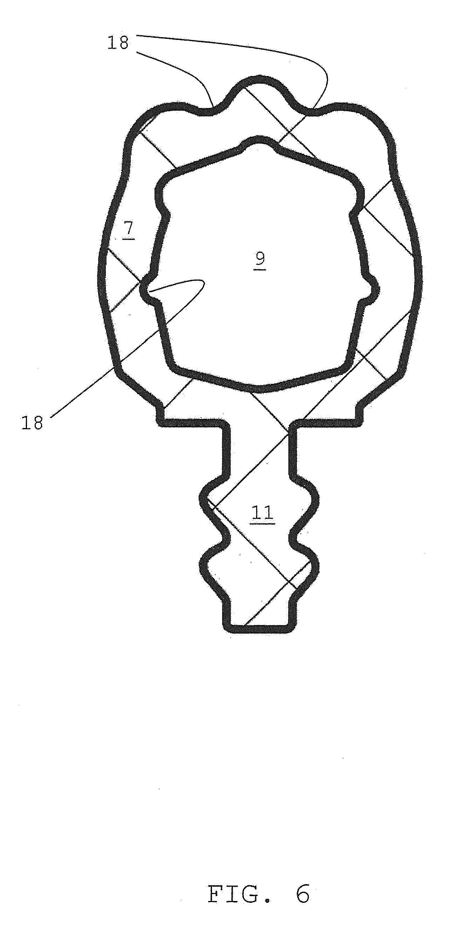

In der Figur 6 ist eine weitere mögliche Ausgestaltung einer Dichtung 7 dargestellt, welche sich im entspannten Zustand befindet. Die Dichtung 7 weist einen nicht runden Querschnitt auf mit Bereichen 18 niedriger Dicke sowohl auf der Innen- als auch an der Aussenfläche der Dichtung 7. Die Bereiche 18 definieren Knickpunkte, bei welchen die Dichtung 7 bevorzugt abknickt, wenn der Druck im Hohlraum 9 verringert wird.

## Patentansprüche

1. Absperrorgan (1) für eine Rohrleitung (2), insbesondere Absperrklappe, umfassend ein Gehäuse (3) mit einer Gehäuseinnenwand (4), eine parallel zur Strömungsrichtung verlaufende Längsachse (5) sowie eine im Gehäuse (3) senkrecht zur Längsachse (5) drehbar gelagerte Verschlussscheibe (6), die zwischen einer Schliessstellung, in welcher die Verschlussscheibe (6) im Wesentlichen quer zur Längsachse (5) angeordnet ist, und einer Offenstellung, in welcher die Verschlussscheibe (6) im Wesentlichen parallel zur Längsachse (5) angeordnet ist, schwenkbar ist, wobei die Verschlussscheibe (6) mit einer elastischen Dichtung (7) zum Abdichten eines in der Schliessstellung vorhandenen Spaltes (8) zwischen der Verschlussscheibe (6) und der Gehäuseinnenwand (4) versehen ist, wobei die Dichtung (7) in eine erste Querschnittsform, bei welcher die Dichtung (7) in der Schliessstellung an der Gehäuseinnenwand (4) anliegt, und in eine zweite Querschnittsform, bei welcher die Dichtung (7) in der Schliessstellung die Gehäuseinnenwand (4) nicht berührt, bringbar ist.

2. Absperrorgan (1) nach Anspruch 1, **dadurch gekennzeichnet, dass** die Dichtung (7) einen fluiddruckbeaufschlagbaren Raum (9) begrenzt.

3. Absperrorgan (1) nach Anspruch 2, **dadurch gekennzeichnet, dass** die Dichtung (7) durch Druckminderung, insbesondere pneumatische Druckminderung, im Raum (9) in die zweite Querschnittsform bringbar ist.

4. Absperrorgan (1) nach Anspruch 3, **dadurch gekennzeichnet, dass** die Dichtung (7) bei Druckausgleich zwischen Raum (9) und einer Umgebung ausserhalb der Rohrleitung (2) die erste Querschnittsform einnimmt.

5. Absperrorgan (1) nach Anspruch 2 bis 4, **dadurch gekennzeichnet, dass** die Dichtung (7) durch Druckerhöhung, insbesondere Pneumatische Druckerhöhung, im Raum (9) in die erste Querschnittsform bringbar ist.

6. Absperrorgan (1) nach einem der vorhergehenden Ansprüche, **dadurch gekennzeichnet, dass** die Dichtung (7) einen druckbeaufschlagbaren Hohlraum (9) aufweist.

7. Absperrorgan (1) nach Anspruch 6, **dadurch gekennzeichnet, dass** die Dichtung (7) in einer umlaufenden Nut (10) der Verschlussscheibe (6) angeordnet ist.

8. Absperrorgan (1) nach einem der Ansprüche 6 oder 7, **dadurch gekennzeichnet, dass** die Dichtung (7) als im Wesentlichen kreisförmiger, hohler O-Ring ausgebildet ist.

9. Absperrorgan (1) nach Anspruch 8, **dadurch gekennzeichnet, dass** die Dichtung (7) eine innenseitige Kreisringscheibe (11) zur Verankerung an der Verschlussscheibe (6) aufweist.

10. Verfahren zum Öffnen eines Absperrorgans (1) nach einem der vorhergehenden Ansprüche, umfassend folgende Schritte:
- die Dichtung (7) wird von der ersten Querschnittsform in die zweite Querschnittsform gebracht,
- die Verschlussscheibe (6) wird von der Schliessstellung in die Offenstellung geschwenkt.

11. Verfahren zum Schliessen eines Absperrorgans (1) nach einem der Ansprüche 1 bis 9, umfassend folgende Schritte:
- die Dichtung (7) wird von der ersten Querschnittsform in die zweite Querschnittsform gebracht,
- die Verschlussscheibe (6) wird von der Offenstellung in die Schliessstellung geschwenkt,
- die Dichtung (7) wird von der zweiten Querschnittsform in die erste Querschnittsform gebracht.
